# EUROPÄISCHE PATENTSCHRIFT

(11) **EP 1 714 050 B1**
(45) Veröffentlichungstag und Bekanntmachung des Hinweises auf die Patenterteilung: **23.10.2019**
(21) Anmeldenummer: 05701342.7
(22) Anmeldetag: 04.02.2005
(51) Int. Cl.: F16D 65/56, F16D 65/14

(54) **NACHSTELLVORRICHTUNG FÜR EINE SCHEIBENBREMSE, INSBESONDERE EINE PNEUMATISCH BETÄTIGTEN SCHEIBENBREMSE**
ADJUSTING DEVICE FOR A DISC BRAKE, PARTICULARLY FOR A PNEUMATICALLY ACTUATABLE DISK BRAKE
DISPOSITIF DE RATTRAPAGE DE JEU POUR UN FREIN A DISQUE, NOTAMMENT D'UN FREIN A DISQUE A COMMANDE PNEUMATIQUE

(30) Priorität: 04.02.2004 DE 102004005509
(43) Veröffentlichungstag der Anmeldung: 25.10.2006
(73) Patentinhaber: KNORR-BREMSE Systeme für Nutzfahrzeuge GmbH, 80809 München (DE)
(72) Erfinder: KLINGNER, Matthias, 82178 Puchheim (DE); KEMPINGER, Georg, 81735 München (DE); MACKE, Wlodzimierz, 82140 Olching (DE)
(74) Vertreter: Mattusch, Gundula
(86) Internationale Anmeldenummer: PCT/EP2005/001126
(87) Internationale Veröffentlichungsnummer: WO 2005/075849

(56) Entgegenhaltungen:
- EP-B- 0 531 321
- US-A- 3 550 732
- US-A- 3 942 827

## Beschreibung

Die Erfindung betrifft eine Nachstellvorrichtung nach dem Oberbegriff des Anspruchs 1 und eine Scheibenbremse.

Nachstellvorrichtungen an Scheibenbremsen dienen zum Ausgleich der infolge von Verschleiß dünner werdenden Bremsbeläge, welche sie in Richtung der Bremsscheibe verschieben, um ein Soll-Lüftspiel einzustellen, damit der zum Bremsen notwendige Arbeitshub konstant bleibt.

Gattungsgemäße Nachstellvorrichtungen sind aus dem europäischen Patent EP 0 531 321 B1 bekannt. Details der Funktion der gattungsgemäßen Nachstellvorrichtung und eines Beispiels einer drehhebelbetätigten Schiebenbremse, für welche sich der gattungsgemäße Nachsteller - aber auch der erfindungsgemäße Nachsteller- eignet, sind in dieser Schrift offenbart. Ein gattungsgemäßer Nachsteller ist in Figur 6 gezeigt. Die in der EP 0 531 321 B1 dargestellten Nachstellvorrichtungen haben sich an sich gut bewährt. Sie sind im Inneren von Drehspindeln angeordnet, welche Druckstücke tragen, die auf einen der Bremsbeläge einwirken. Sie eignen sich für Scheibenbremsen verschiedener Art, denen gemeinsam ist, dass eine oder mehrere Drehspindeln aufweisen.

Während einer Nachstellbewegung beim Bremsen übertragen die gattungsgemäßen Nachstellvorrichtungen mittels einer Abtriebsbuchse ein Drehmoment auf die Drehspindel, welche an ihren bremsscheibenzugewandten Ende das Druckstück trägt, das auf die Belagträgerplatte eines Bremsbelages einwirkt. Durch die Drehbewegung der Drehspindel wird das Druckstück axial in Richtung der Scheibenbremse verschoben, um eine verschleißbedingte Verringerung der Dicke des remsbelagmaterials auszugleichen. Zur Sicherstellung der Nachstellfunktion weisen die Nachstellvorrichtungen im allgemeinen einen Freilauf auf, damit der Nachsteller nicht beim Lösen der Bremse zurückdreht sowie eine Überlastkupplung, die beim Anliegen der Druckstücke am Bremsbelag anspricht.

Die Abtriebsbuchse des Standes der Technik ist an ihrem Außenumfang mit wenigstens einem radial vorkragenden zahnartigen Zahn zum Eingriff in wenigstens eine korrespondierende zahnartige Nut am Innenumfang der Drehspindel versehen. Diese Anordnung hat sich an sich bewährt.

Zum Stand der Technik werden ferner die DE 1600182 B2 zum Stand der Technik bei Nachstellvorrichtungen genannt. Diese Schrift zeigt eine elastische Abstützung von Nasen mittels Federn. Die Federn drücken bei Zugentlastung der Zuspannvorrichtung die Nasen aneinander. Die Drehspindel wirkt jedoch nicht mittels eines Druckstücks auf einen Bremsbelag.

Vor diesem Hintergrund ist es die Aufgabe der Erfindung, die gattungsgemäße Nachstellvorrichtung derart weiterzuentwickeln, dass ihre Funktion noch weiter optimiert wird.

Diese Aufgabe löst die Erfindung durch den Gegenstand des Anspruchs 1.

Nach Anspruch 1 ist/sind bei der Abtriebszahnanordnung der wenigstens eine Zahn und/oder die wenigstens eine Nut elastisch komprimierbar ausgebildet ist/sind und/oder bei der Abtriebszahnanordnung ist/sind der wenigstens eine Zahn und/oder die wenigstens eine Nut elastisch gegeneinander abgestützt und/oder bei der Abtriebszahnanordnung ist/sind mehrere der Zähne und/oder mehrere Nutabschnitte (9, 9') elastisch (insbesondere federnd) gegeneinander abgestützt.

Danach sind die Abtriebszahnanordnung, insbesondere wenigstens ein Zahn, und/oder die wenigstens eine Nut elastisch komprimierbar ausgebildet und/oder elastisch gegeneinander abgestützt.

Nach dem Gegenstand des Anspruchs 1 wird eine Nachstellvorrichtung realisiert, welche an der Schnittstelle zwischen der Abtriebshülse der Nachstellvorrichtung und der Nachstell-Drehspindel (typischerweise ein Gewinderohr) spielfrei alle Fertigungstoleranzen ausgleicht, ohne beim Verdrehen und Verschieben der Nachstellerachse zu einem Klemmen zu führen.

Im Gegenteil dazu werden sogar die Nachstelleigenschaften bei Rüttelbeanspruchungen, Verdrehen und Verschieben der Nachstellerachse zur Gewinderohr bzw. Drehspindelachse , Wiederholversuchen durch statisches Zuspannen und deren Kombination positiv beeinflusst.

Die Erfindung eignet sich besonders vorteilhaft für eine Nachstellvorrichtung mit einer Abtriebsbuchse, welche in eine axiale Öffnung in der Drehspindel eingreift und welche an ihrem Außenumfang wenigstens einen Zahn aufweist, welche in eine Nut am Innenumfang der Drehspindel eingreift. Sie kann theoretisch aber auch bei anderen Anordnungen eingesetzt werden, wenn beispielsweise die Drehspindel abschnittsweise eine Außenverzahnung aufweist, die mit einem Abtriebsrad der Nachstellvorrichtung (die auch einen elektrischen Antrieb aufweisen kann) kämmt.

Spielfreie Wellen-Nabenverbindungen sind an sich bekannt. Ihr Einsatz bei Nachstellvorrichtungen für Bremsen wurde aber bisher nicht erwogen. Hierzu werden die DE 1921099 A, die JP 4254045 AA, die DE 1205345 B und die DE 19855538 A1 genannt.

Insbesondere kann die Wirkung der Erfindung mittels einer Feder realisiert werden, welche zwei oder mehrere relativ zueinander bewegliche Zähne der Abtriebszahnanordnung und/oder zwei relativ zueinander bewegliche Außenflankenabschnitte eines einzigen Zahnes oder mehrerer Zähne federnd vorspannt.

Vorzugsweise weist der wenigstens eine ein- oder mehrteilige Zahn nach einer besonders funktionssicheren Alternative die zwei relativ zueinander bewegliche Außenflankenteile auf, zwischen denen wenigstens eine oder mehrere Druckfeder(n) angeordnet ist/sind, welche die beiden Außenflankenteile derart auseinander drücken, dass sich die beiden Außenflanken spielfrei an die Innenflanken der Nut legen.

Bevorzugt wird dabei das eine Außenflankenteil einstückig mit der Abtriebsbuchse ausgebildet und das andere Außenflankenteil am Außenumfang der Abtriebsbuchse beweglich, insbesondere verschieblich geführt.

Bei einer weiteren Ausführungsform schließt sich an die Abtriebsbuchse axial eine Zahnscheibe an, deren Durchmesser dem Durchmesser der Abtriebsbuchse entspricht und die wenigstens einen Zahn aufweist, der mit dem Zahn der Abtriebsbuchse korrespondiert, wobei sich die Nut der Drehspindel axial bis in den Bereich des Zahns der Zahnscheibe erstreckt. Dabei ist die Zahnscheibe relativ zur Abtriebsbuchse verdrehbar ausgebildet und die Zahnscheibe und die Abtriebsbuchse sind relativ zueinander mittels einer Feder, insbesondere einer Drehfeder, vorgespannt, so dass auf einfache Weise die Zahnanordnung wenigstens zwei relativ zueinander federvorgespannte und damit relativ zueinander elastisch komprimierbare Zähne aufweist. Als Federn können z.B. Teller- oder Schraubenfedern genutzt werden.

Zweckmäßig ist die Drehposition zwischen der Zahnscheibe und der Abtriebsbuchse mittels einer Zahnkupplung fixierbar, um eine gewünschte Vorspannung festzuhalten. Bei einer weiteren Ausführungsform kann auch vorgesehen sein, daß das Abtriebsteil des Nachstellers als Hülse mit Innenprofil ausgebildet ist und die Drehspindel ein Außenprofil aufweist, wobei dann das Abtriebsteil des Nachstellers die Drehspindel umgreift und die Außenzähne die Drehspindel in Nuten des Abtriebsteils des Nachstellers eingreift. Auch bei dieser Anordnung in quasi umgekehrter Art ist die Erfindung einsetzbar.

Nach einer weiteren bevorzugten Variante ist an ein axiales Ende der Drehspindel mit einer oder mehreren der Nuten eine Ringscheibe angesetzt bzw. angeordnet, deren Innenumfangsprofil dem Innenumfangsprofil der übrigen Spindel entspricht, also auch die Nut aufweist, wobei die Ringscheibe und die Spindel mittels eines federnden Elementes relativ zueinander vorgespannt sind. Damit ist die Nut quasi mehrteilig (ein Teil in der Ringscheibe und einer in der Drehspindel) auch in sich komprimierbar. Auch diese Ausführungsvariante realisiert die Vorteile der Erfindung.

Denkbar ist es schließlich auch, dass direkt zwischen einer der Außenflanken eines Zahnes des Abtriebsteils und der Innenflanke der Nut eine Feder angeordnet ist, welche den Zahn und die Nut gegeneinander elastisch vorspannt.

Die Erfindung schafft auch eine Scheibenbremse mit einer Nachstellvorrichtung nach einem der Ansprüche 1 bis 15.

Weitere vorteilhafte Ausgestaltungen sind in den übrigen Unteransprüchen angegeben.

Nachfolgend wird die Erfindung anhand eines Ausführungsbeispiels unter Bezug auf die Zeichnung näher beschrieben. Es zeigt:
- Fig. 1a,b: eine Querschnittsansicht des abtriebsbuchsenseitigen Abschnitts eines erfindungsgemäßen Nachstellers sowie eine axialseitige Ansicht dieses Abschnittes;
- Fig.2: einen Schnitt durch den Bereich des Eingriff eines Abtriebszahns der Abtriebsbuchse des erfindungsgemäßen Nachstellers, welcher in eine korrespondierende Nut in der die Abtriebsbuchse umgebenden Drehspindel eingreift;
- Fig. 3-5: zu Fig. 2 analoge Darstellungen eines Nachstellers nach dem Stand der Technik in verschiedenen Betriebsstellungen; und
- Fig. 6: einen Schnitt durch einen Nachsteller nach dem Stand der Technik:
- Fig. 7: einen Schnitt durch den Bereich des Eingriff eines Abtriebszahns der Abtriebsbuchse eines weiteren erfindungsgemäßen Nachstellers, welcher in eine korrespondierende Nut in der die Abtriebsbuchse umgebenden Drehspindel eingreift;
- Fig. 8: eine teilgeschnittene Ansicht des abtriebsbuchsenseitigen Abschnitts eines weiteren erfindungsgemäßen Nachstellers;
- Fig. 9: eine teilgeschnittene Ansicht des abtriebsbuchsenseitigen Abschnitts eines weiteren erfindungsgemäßen Nachstellers;
- Fig. 10, 11: eine Seitenansicht eines weiteren erfindungsgemäßen Nachstellers und eine geschnittene Ansicht dieses Nachstellers,
- Fig. 12a, b: perspektivische Ansichten von Elementen des Nachstellers aus Fig. 10 und 11; und
- Fig. 13a-c: eine weitere Variante eines erfindungsgemäßen Nachstellers in verschiedenen Ansichten.

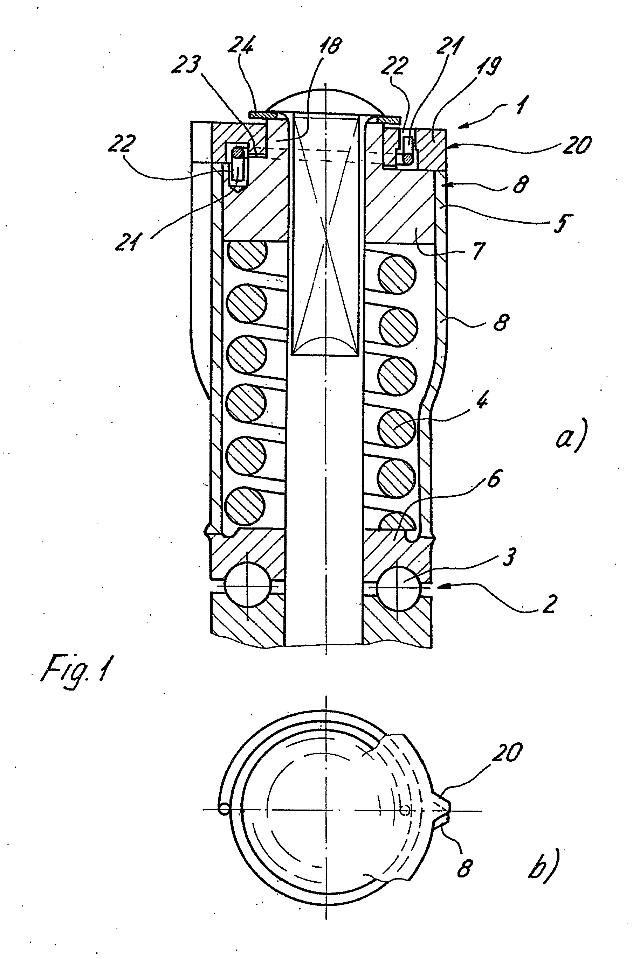

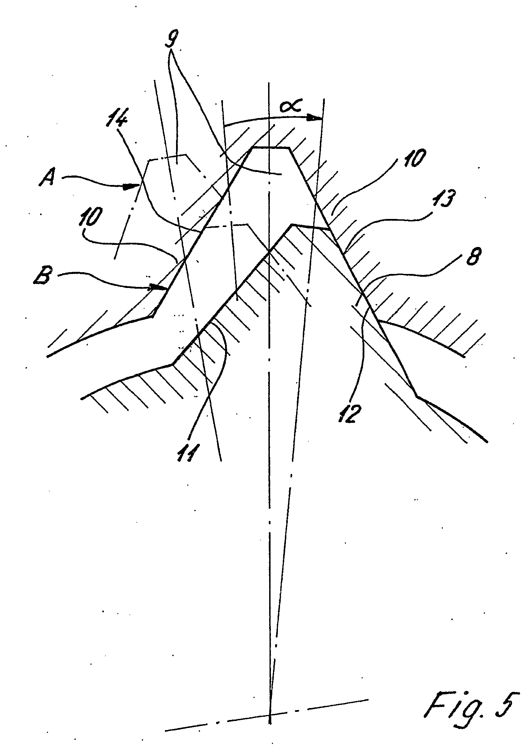

Fig. 1 zeigt einen abtriebsbuchsenseitigen Abschnitt einer erfindungsgemäßen Nachstellvorrichtung, welche im übrigen beispielhaft nach Art der EP 0 531 321 B1, insbesondere nach Art der dortigen Fig. 5 - aufgebaut sein kann. Die Erfindung ist aber nicht auf den dort gezeigten Nachsteller beschränkt sondern eignet sich für alle Arten von Nachstellern, bei welchen eine Abtriebsbuchse in eine Drehspindel eingreift, die relativ zur Abtriebsbuchse unverdrehbar ist bzw. sich mit dieser bei Nachstellbewegungen mit dieser mitdreht, wobei sie sich relativ zur Abtriebsbuchse axial verschiebt.

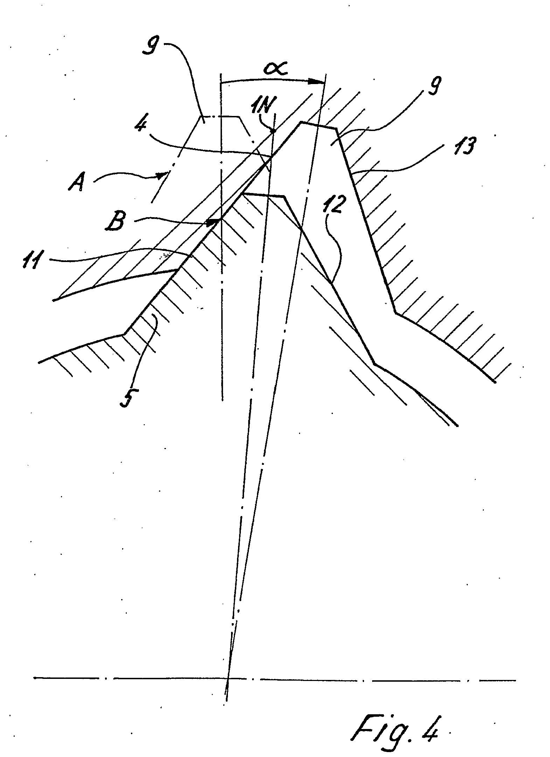

Die Nachstellvorrichtung 1 weist neben einer Überlastkupplung 2 mit einer Kugelrampenanordnung 3 und einer Druckfeder 4, an welche sich hier nach unten hin weitere Elemente wie ein Freilauf und eine Abtriebsverbindung zum Drehhebel anschließen (hier nicht zu erkennen, siehe Fig. 4), an ihrem einen axialen Ende eine Abtriebsbuchse 5 auf.

Die Druckfeder 4 ist im Inneren der Abtriebsbuchse 5 angeordnet und stützt sich zwischen einer kugelrampenseitigen Scheibe 6, welche die Abtriebsbuchse 5 an ihrem einen Ende axial verschließt und einer zweiten Scheibe 7 - einer Mitnehmerscheibe - ab, welche unverdrehbar in die Abtriebsbuchse 5 an ihrem weiteren, von der Kugelrampenanordnung 3 abgewandten Ende eingesetzt ist.

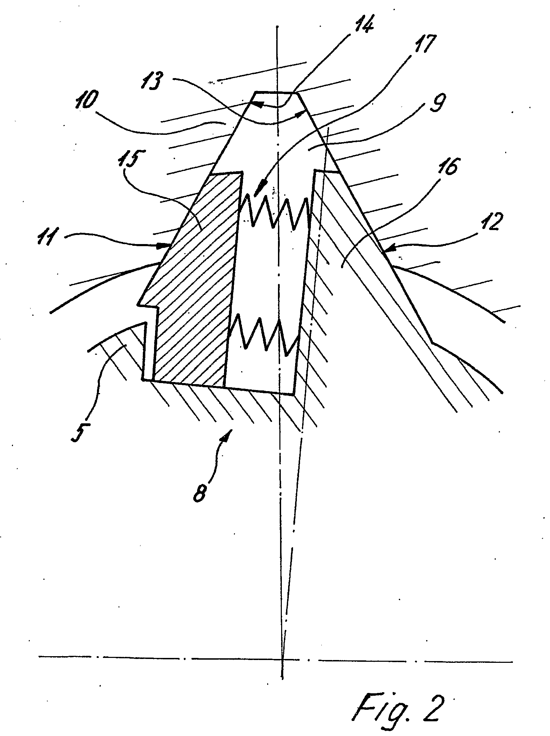

Die Abtriebsbuchse 5 hat hier einen zylindrischen Querschnitt, wobei am Außenumfang der Abtriebsbuchse 5 wenigstens abschnittsweise eine Abtriebszahnanordnung mit wenigstens einem radial vorkragenden Zahn 8 ausgebildet ist, der zum Eingriff in wenigstens eine korrespondierende zahnartige Nut 9 der Drehspindel 10 - siehe hierzu das weitere Ausführungsbeispiel der Fig. 2 - dient, um diese zur Durchführung von Nachstellbewegungen sowie beim Belagwechsel mitzudrehen. Die Abtriebsbuchse 5 ist relativ zur Drehspindel 10 unverdrehbar aber axial in dieser verschieblich geführt.

Es können auch zwei oder mehr der Zähne 8 und der Nuten 10 an der Abtriebsbuchse 5 bzw. an der Drehspindel verteilt sein.

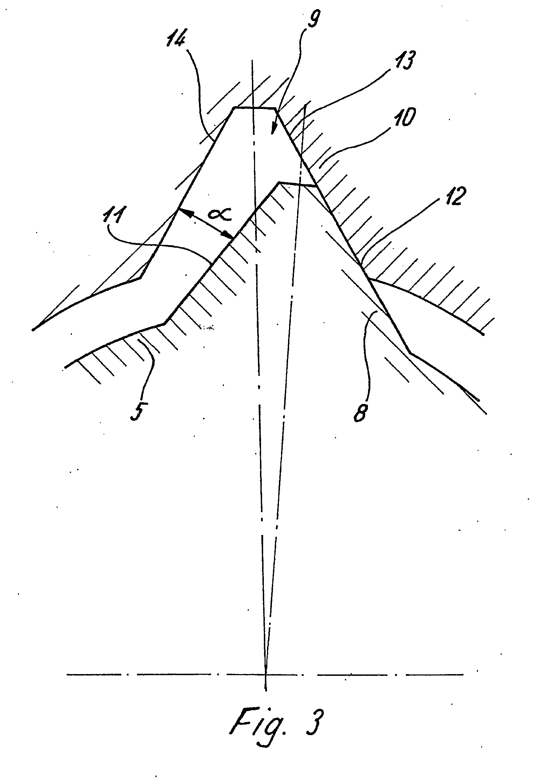

Um das fertigungsbedingt zwangsweise vorhandene Spiel (das dem Winkel α der Fig. 3 entspricht) zwischen der Abtriebszahnanordnung und der Nut 9 zu minimieren bzw. gegen Null zu bringen, ist die Abtriebszahnanordnung elastisch komprimierbar ausgebildet.

So wird nach Fig. 2 der Zahn 8 beim Einsetzen in die Nut zusammengedrückt und weitet sich dass beim Eingriff in die Nut so auf, dass er sich mit beiden Außenflanken 11, 12 spielfrei an die Innenflanken 13, 14 der Nut 9 legt.

Dies kann auf verschiedene Weise erreicht werden. Theoretisch ist es denkbar, dass der Zahn 8 der Zahnanordnung im Bereich seiner Außenflanken mit einem elastisch komprimierbaren Material versehen wird.

Vorzugsweise wird er aber aufgrund der hohen Temperaturen an einer Scheibenbremse und des zu übertragenden Drehmoments mehrteilig ausgebildet. Insbesondere ist es vorteilhaft, wenn jeder Zahn 8 jeweils zwei Außenflankenteile 15, 16 aufweist, zwischen denen wenigstens eine oder mehrere Druckfeder(n) 17 angeordnet ist/sind, welche die beiden Außenflankenteile 15, 16 derart auseinander drücken, dass sich die beiden Außenflanken 11, 12 spielfrei an die Innenflanken 13, 14 der Nut 9 legen. Eine derartige Anordnung zeigt Fig. 2. Die Nachteile des Standes der Technik werden derart auf einfache Weise vermieden. Dabei ist - wie in Fig.2 zu erkennen, dass eine Außenflankenteil 16 hier einstückig mit der Abtriebsbuchse 5 verbunden bzw. ausgebildet und das andere Außenflankenteil am Außenumfang der Abtriebsbuchse beweglich, insbesondere verschieblich geführt, was auf beliebige Weise realisierbar ist, z.B. durch eine Nut-/Federanordnung zwischen der Abtriebsbuchse 5 und dem beweglichen Außenflankenteil 15 (hier nicht dargestellt). Mit dem Pfeil S wird in Fig. 2 die Nachstelldrehrichtung angegeben.

Nach Fig. 1 ist dagegen auf einem axialen Ansatz 18 der zweiten Mitnehmerscheibe 7, der aus der Abtriebsbuchse 5 axial vorsteht, relativ zu dieser drehbar eine Zahnscheibe 19 gelagert, deren Durchmesser dem Durchmesser der Abtriebsbuchse entspricht und die ebenfalls wenigstens einen Zahn 20 oder mehrere Zähne 20 aufweist, die zum Zahn 8 korrespondieren. Die Nut 9 erstreckt sich axial bis in den Bereich des Zahns 20.

Die Feder ist hier platzsparend und kostengünstig eine Drehfeder 21, welche hier in einer Nut 22 verläuft, welche jeweils axialseitig abschnittsweise in der Zahnscheibe und der Mitnehmerscheibe 7 ausgebildet ist. Die Mitnehmerscheibe 7 ist mit der Abtriebsbuchse 5 drehfest verbunden. Die Drehfeder 21 spannt die Abtriebsbuchse 5 und die Zahnscheibe 19 derart relativ zueinander vor, dass sich der eine wenigstens eine Zahn 8 der Abtriebsbuchse an die eine Innenflanke 14 der Nut 9 und der korrespondierende Zahn 20 an die andere Innenflanke 13 legt, so dass auch hier das Spiel zwischen der Zahnanordnung und der Nut 9 auf Null reduziert wird (siehe auch Fig. 1b). Dabei sind die Zähne 8 und 20 der Zahnanordnung axial zueinander versetzt angeordnet.

Eine Zahnkupplung 23 zwischen den Axialflächen der Mitnehmerscheibe 7 und der Zahnscheibe 19 hält die beiden Elemente des Nachstellers in definierten Vorspannungsstellung zueinander. Mittels hakenartig nach außen umgebogener Stege 24 am axialen freien Ende des Ansatzes 18, der auch als Nabe für die Zahnscheibe 19 fungiert, wird die Zahnscheibe 19 ohne größeren Aufwand an der Mitnehmerscheibe 7 und damit an der Abtriebsbuchse 5 drehbar gehalten und gesichert.

Fig. 3 bis 5 zeigen dagegen die Situation nach dem Stand der Technik. Fig. 3 gibt die Ausgangslage nach einem Lösen der Bremse zwischen einem Zahn 8 und der Nut 9 des Gewinderohrs bzw. der Drehspindel 10 wieder. Fertigungsbedingt ist ein Spiel erkennbar, d.h., es liegt nur eine der Außenflanken 12 des Zahns 8 an einer der Innenflanken 13 der Nut 9 an.

Wie in Fig. 4 angedeutet, kann sich die Drehspindel 10 aus einer Position A in eine Position B um den Winkel α derart verdrehen, dass die andere Außenflanke 11 des Zahns 8 an der anderen Innenflanke 14 der Nut 9 anliegt.

Fig. 5 zeigt an, dass sich bei einer erneuten Betätigung die Nachstellvorrichtung so solange dreht, bis die Flanken wieder wie in Fig. 1 aneinander liegen, wobei sich die gesamte Anordnung aus Zahn 8 und Gewinderohr bzw. Drehspindel 10 aber aus der Position A in die Position B um einen Winkel α verdreht hat. Diesen Effekt vermeidet die Erfindung auf einfache Weise.

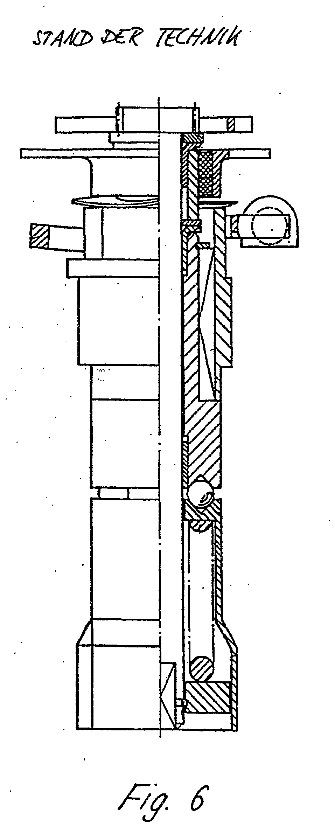

Fig. 6 zeigt noch aus dem gattungsgemäßen Stand der Technik eine Darstellung einer gattungsgemäßen Nachstellvorrichtung, welche nach Art der Fig. 1 oder 2 modifizierbar ist.

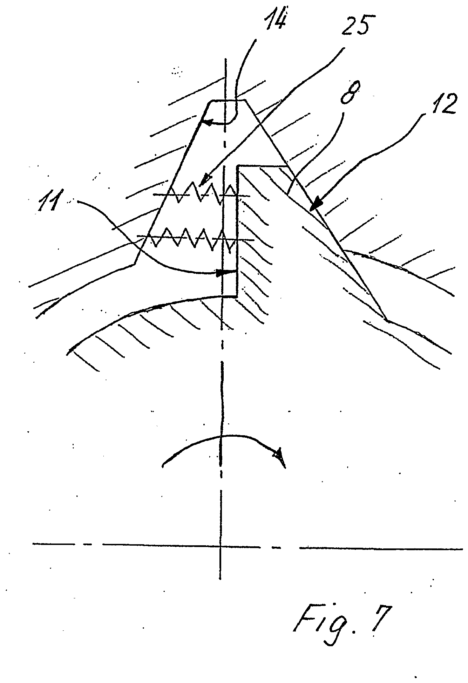

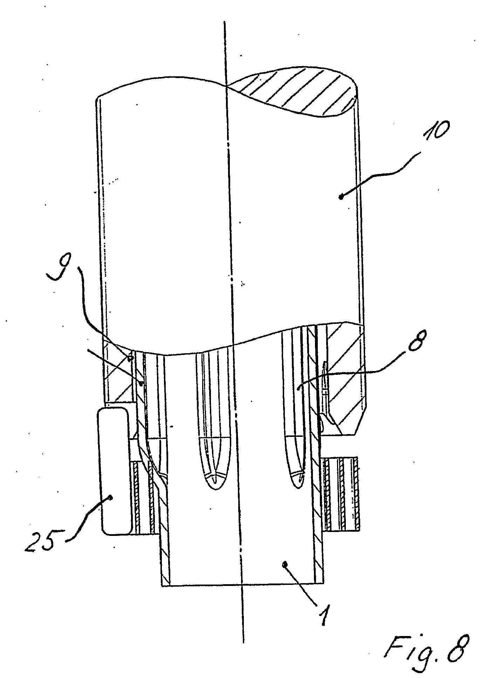

Fig. 7 und 8 zeigen eine alternative bevorzugte Variante, bei welcher direkt zwischen einer der Außenflanken 11 eines Zahnes 8 und der Innenflanke 14 der Nut 9 eine Feder 25 angeordnet ist, welche den Zahn und die Nut gegeneinander vorspannt. Auch derart tritt quasi kein Spiel mehr zwischen dem Zahn 8 und der Nut 9 auf.

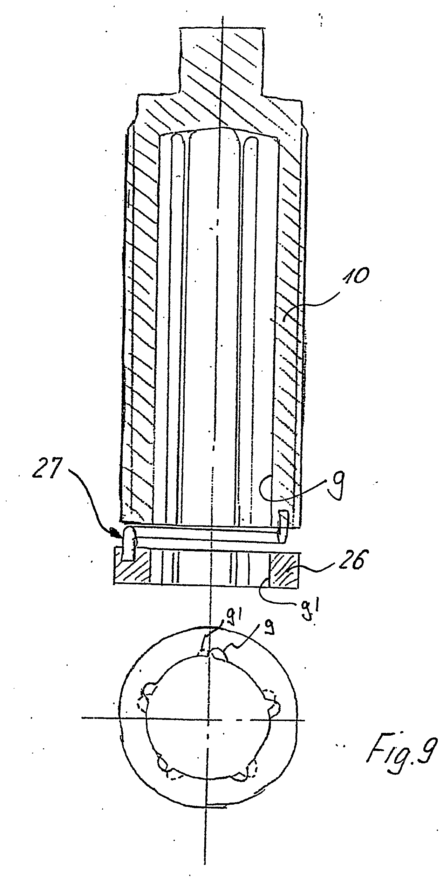

Nach Fig. 9 wird dagegen eine Art umgekehrte Anordnung zu Fig. 1 und 2 geschaffen. Hier ist an das Ende der Drehspindel 10 nach Art eines Gewinderohres mit einer oder mehreren der Nuten 9 eine Art Ringscheibe 26 angesetzt, deren Innenumfangsprofil dem Innenumfangsprofil der übrigen Drehspindel 10 entspricht.

Die Zähne 8 oder Finnen am Nachstelleraußenumfang müssen hier so lang sein, dass sie nicht nur in die Nut 9 in der Drehspindel 10 sondern auch in die Nut 9' in der Ringscheibe 26 eingreifen. Die Ringscheibe 26 und die Drehspindel 10 sind mittels eines federnden Elementes 27 relativ zueinander vorgespannt, so dass auch hier wieder der erfindungsgemäße Effekt der "Spielfreiheit" realisiert wird. Eine optionale Zahnkupplung hält diese beiden Elemente ggf. in Vorspannstellung zueinander (hier nicht zu erkennen).

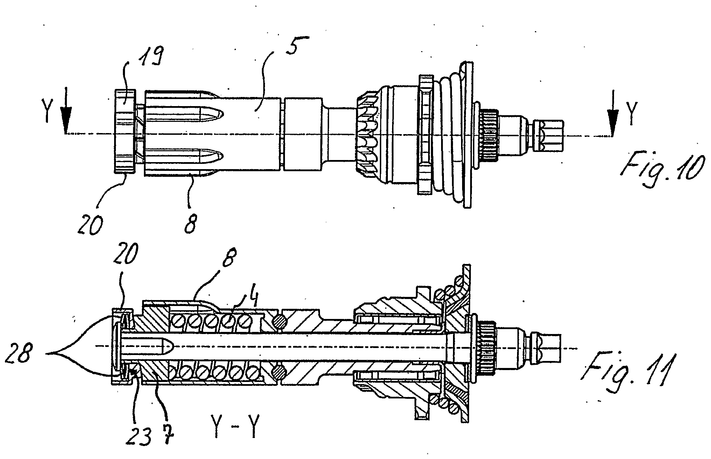

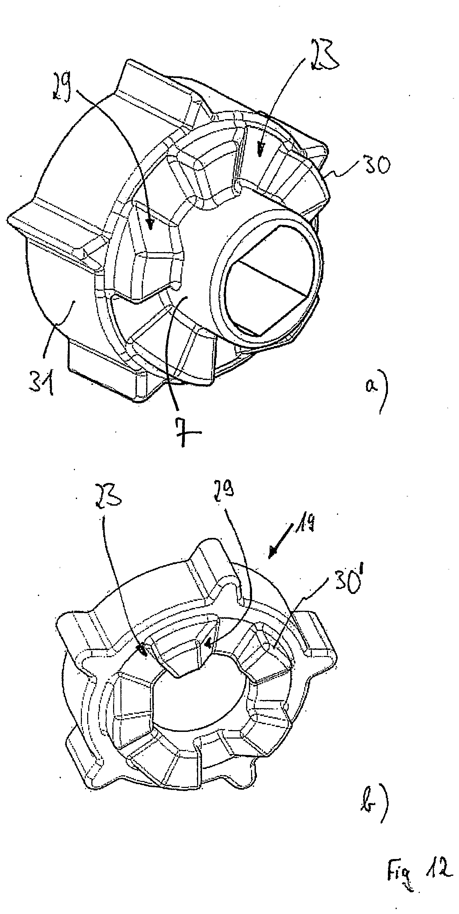

Nach Fig. 10 und 11 ist die Zahnkupplung 23 wiederum zwischen den Axialflächen einer weiteren Variante der Zahnscheibe 19 und der Mitnehmerscheibe 7 angeordnet. Nach Fig. 10 und 11 ist die diese Elemente vorspannende Feder platzsparend und kostengünstig als Tellerfeder 28 ausgebildet, welche im Zusammenspiel mit schrägen Rampen 29 an den Zähnen 30 der Zahnkupplung 23 die Zahnscheibe 19 relativ zur Mitnehmerscheibe 7 vorspannt. Die Gegenzähne 30' der Zahnkupplung 23 an der Zahnscheibe weisen ebenfalls entsprechende schräge Rampen 29 auf (siehe Fig. 12 a und b). Derart ist die Drehposition zwischen der Zahnscheibe 19 und der Scheibe 7 mittels der Zahnkupplung fixierbar, um eine gewünschte Vorspannung festzuhalten.

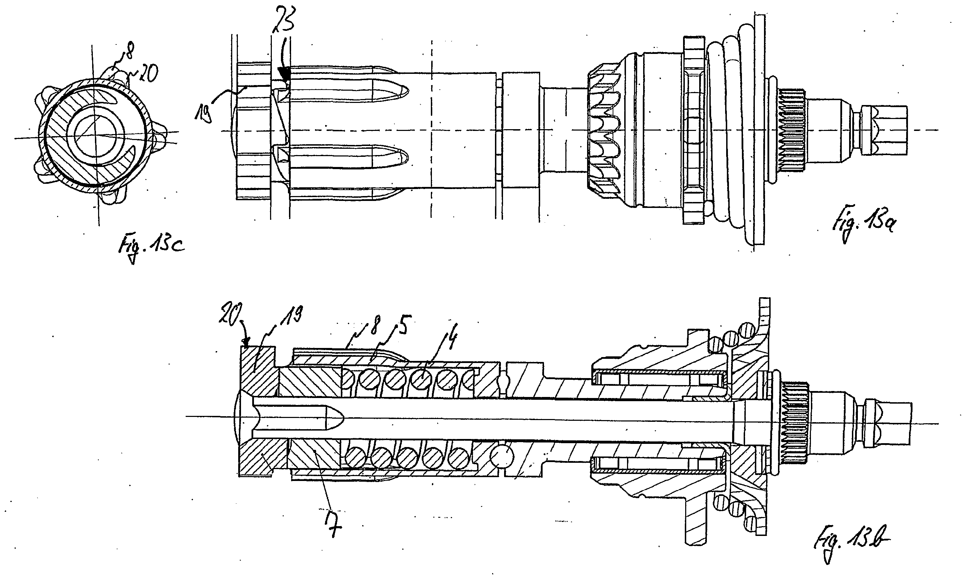

Nach Fig. 13 stützt sich die Druckfeder 4 wiederum zwischen der Abtriebsbuchse 5 und der Mitnehmerscheibe 7 ab. An die Mitnehmerscheibe 7 schließt sich wiederum axial eine Zahnscheibe 19 an, wobei hier wiederum zwischen diesen Elementen die Zahnkupplung 23 mit schrägen Rampen ausgebildet ist. Auf eine weitere separate Feder kann derart bei geeigneter Auslegung der einzelnen Elemente in kostengünstiger Weise verzichtet werden. Als Vorspannfeder wirkt die Druckfeder 4.

**Bezugszeichen**

| | |
|---|---|
| Nachstellvorrichtung | 1 |
| Überlastkupplung | 2 |
| Kugelrampenanordnung | 3 |
| Druckfeder | 4 |
| Abtriebsbuchse | 5 |
| Erste Scheibe | 6 |
| Zweite Scheibe | 7 |
| Zahn | 8 |
| Nut | 9 |
| Drehspindel | 10 |
| Außenflanken | 11, 12 |
| Innenflanken | 13, 14 |
| Außenflankenteile | 15, 16 |
| Druckfeder(n) | 17 |
| axialer Ansatz | 18 |
| Zahnscheibe | 19 |
| Zahn | 20 |
| Drehfeder | 21 |
| Nut | 22 |
| Zahnkupplung | 23 |
| Stege | 24 |
| Feder | 25 |
| Ringscheibe | 26 |
| federndes Element | 27 |
| Tellerfeder | 28 |
| schräge Rampen | 29a, b |
| Zähne | 30 |

## Patentansprüche

1. Nachstellvorrichtung (1) für eine Scheibenbremse,
a) welche zum Verdrehen und damit axialen Verstellen wenigstens einer Drehspindel (10) ausgelegt ist,
b) die mittels eines Druckstücks auf einen Bremsbelag einwirkt
c) und eine Abtriebsbuchse mit einer Abtriebszahnanordnung mit wenigstens einem Zahn (8) aufweist,
d) der in wenigstens eine Nut (9) der Drehspindel (10) eingreift,
e) wobei die Abtriebsbuchse (5) relativ zur Drehspindel (10) unverdrehbar aber axial in dieser verschieblich geführt ist,
**dadurch gekennzeichnet, dass**
f) bei der Abtriebszahnanordnung der wenigstens eine Zahn (8) und/oder die wenigstens eine Nut (9) elastisch komprimierbar ausgebildet ist/sind
g) bei der Abtriebszahnanordnung der wenigstens eine Zahn (8) und/oder die wenigstens eine Nut (9) elastisch gegeneinander abgestützt sind, oder
h) bei der Abtriebszahnanordnung mehrere der Zähne (8, 20) und/oder mehrere Nutabschnitte (9, 9') elastisch gegeneinander abgestützt sind.

2. Nachstellvorrichtung nach Anspruch 1, **dadurch gekennzeichnet, dass** die Nut (9) am Innenumfang der Drehspindel (10) ausgebildet ist.

3. Nachstellvorrichtung nach Anspruch 1 oder 2, **dadurch gekennzeichnet, dass** die Abtriebsbuchse (5) in eine axiale Öffnung in der Drehspindel (10) eingreift und an ihrem Außenumfang den wenigstens einen Zahn (8) aufweist, der in die Nut (9) eingreift, welche am Innenumfang der Drehspindel (10) ausgebildet ist.

4. Nachstellvorrichtung nach einem der vorstehenden Ansprüche, **dadurch gekennzeichnet, dass** eine Feder (17) zwei oder mehrere relativ zueinander bewegliche Zähne (8, 20) der Abtriebszahnanordnung und/oder zwei relativ zueinander bewegliche Außenflankenteile (15, 16) eines einzigen Zahnes oder mehrerer Zähne (8) federnd vorspannt.

5. Nachstellvorrichtung nach einem der vorstehenden Ansprüche, **dadurch gekennzeichnet, dass** der wenigstens eine Zahn (8) die zwei relativ zueinander beweglichen Außenflankenteile (15, 16) aufweist, zwischen denen wenigstens eine oder mehrere Druckfeder-n (17) angeordnet ist/sind, welche die beiden Außenflankenteile (15, 16) derart auseinander drücken, dass sich die beiden Außenflanken (11, 12) spielfrei an die Innenflanken (13, 14) der Nut (9) legen.

6. Nachstellvorrichtung nach Anspruch 4 oder 5 **dadurch gekennzeichnet, dass** das eine der Außenflankenteile (16) einstückig mit der Abtriebsbuchse (5) ausgebildet und das andere der Außenflankenteile (15) am Außenumfang der Abtriebsbuchse (5) beweglich, insbesondere verschieblich geführt ist.

7. Nachstellvorrichtung nach einem der vorstehenden Ansprüche, **dadurch gekennzeichnet, dass**
- sich an eine bzw. die Abtriebsbuchse (5) axial eine Zahnscheibe (19) anschließt, deren Durchmesser dem Durchmesser der Abtriebsbuchse (5) entspricht und die wenigstens einen weiteren Zahn (20) aufweist, der mit einem bzw. dem Zahn (8) der Abtriebsbuchse (5) korrespondiert, wobei sich die Nut (9) der Drehspindel (10) axial bis in den Bereich des Zahns (20) der Zahnscheibe (19) erstreckt,
- wobei die Zahnscheibe (19) relativ zur Abtriebsbuchse (5) verdrehbar ist, und
- die Zahnscheibe (19) und die Abtriebsbuchse (5) relativ zueinander mittels einer Feder (21, 28, 4) vorgespannt sind.

8. Nachstellvorrichtung nach Anspruch 7, **dadurch gekennzeichnet, dass** die Feder eine Drehfeder (21) ist.

9. Nachstellvorrichtung nach Anspruch 8, **dadurch gekennzeichnet, dass** die Drehfeder (21) in einer Nut (22) in der Zahnscheibe (19) und einer zweiten Scheibe (7) - einer Mitnehmerscheibe - angeordnet ist.

10. Nachstellvorrichtung nach Anspruch 9, **dadurch gekennzeichnet, dass** die Drehposition zwischen der Zahnscheibe (19) und der Abtriebsbuchse (5) mittels einer Zahnkupplung (23) fixierbar ist.

11. Nachstellvorrichtung nach Anspruch 10, **dadurch gekennzeichnet, daß** eine weitere Feder - vorzugsweise eine Tellerfeder (28) - über schräge Rampen (29) an den Zähnen (30) der Zahnkupplung (23) die Zahnscheibe (19) vorspannt.

12. Nachstellvorrichtung nach Anspruch 11, **dadurch gekennzeichnet, dass** die weitere Feder die Druckfeder (4) ist.

13. Nachstellvorrichtung nach einem der Ansprüche 9 bis 12, **dadurch gekennzeichnet, dass** sich die Druckfeder (4) zwischen der Abtriebsbuchse (5) und der Mitnehmerscheibe (7) abstützt, wobei sich an die Mitnehmerscheibe (7) axial die Zahnscheibe (19) anschließt und die Zahnkupplung (23) wiederum mit schrägen Rampen zwischen der Mitnehmerscheibe (7) und der Zahnscheibe (19) ausgebildet ist.

14. Nachstellvorrichtung nach einem der vorstehenden Ansprüche, **dadurch gekennzeichnet, dass** der Zahn (8) der Abtriebszahnanordnung im Bereich seiner Außenflanken mit einem elastisch komprimierbaren Material versehen wird.

15. Nachstellvorrichtung nach einem der vorstehenden Ansprüche 1 oder 2, **dadurch gekennzeichnet, daß** ein Abtriebsteil des Nachstellers als Hülse mit Innenprofil ausgebildet ist und die Drehspindel ein Außenprofil aufweist, wobei das Abtriebsteil des Nachstellers die Drehspindel umgreift und Außenzähne der Drehspindel in Innennuten des Abtriebsteils der Nachstellvorrichtung eingreifen.

16. Nachstellvorrichtung nach Anspruch 1. **dadurch gekennzeichnet, daß** direkt zwischen einer der Außenflanken (11) eines Zahnes (8) des Abtriebsteils (5) und der Innenflanke (14) der Nut (9) eine Feder (25) angeordnet ist, welche den Zahn (8) und die Nut (9) gegeneinander elastisch vorspannt.

17. Nachstellvorrichtung nach Anspruch 1, **dadurch gekennzeichnet, daß** an ein axiales Ende der Drehspindel (10) mit einer oder mehreren der Nuten (9) eine Ringscheibe (26) angesetzt ist, deren Innenumfangsprofil dem Innenumfangsprofil der übrigen Drehspindel (10) entspricht, wobei die Ringscheibe (26) und die Drehspindel (10) mittels eines federnden Elementes (27) relativ zueinander vorgespannt sind.

18. Scheibenbremse, **gekennzeichnet durch** eine Nachstellvorrichtung nach einem der vorstehenden Ansprüche.

## Claims

1. Adjusting device (1) for a disc brake,
a) which is designed to rotate and thus axially adjust at least one rotary spindle (10),
b) which acts on a brake pad by means of a pressure element
c) and has an output sleeve with an output tooth assembly with at least one tooth (8),
d) which engages with at least one groove (9) of the rotary spindle (10),
e) wherein the drive sleeve (5) is non-rotatable relative to the rotary spindle (10) but guided therein for axial movement,
**characterised in that**
f) in the output tooth assembly the at least one tooth (8) and/or the at least one groove (9) is/are embodied so as to be elastically compressible,
g) in the output tooth assembly the at least one tooth (8) and/or the at least one groove (9) is/are supported elastically one against the other, or
h) in the output tooth assembly a plurality of the teeth (8, 20) and/or a plurality of groove sections (9, 9') are supported elastically one against the other.

2. Adjusting device according to claim 1, **characterised in that** the groove (9) is formed on the inner circumference of the rotary spindle (10).

3. Adjusting device according to claim 1 or 2, **characterised in that** the output sleeve (5) engages with an axial opening in the rotary spindle (10) and on its outer circumference has the at least one tooth (8) which engages with the groove (9) which is formed on the inner circumference of the rotary spindle (10).

4. Adjusting device according to any of the preceding claims, **characterised in that** a spring (17) resiliently preloads two or more teeth (8, 20), which can move relative to one another, of the output tooth assembly and/or two outer edge parts (15, 16), which can move relative to one another, of a single tooth or of a plurality of teeth (8).

5. Adjusting device according to any of the preceding claims, **characterised in that** the at least one tooth (8) has the two outer edge parts (15, 16) which can move relative to one another and between which one or more compression spring(s) (17) is/are arranged, which compression springs (17) push the two outer edge parts (15, 16) apart from one another in such a way that the two outer edges (11, 12) bear without play against the inner edges (13, 14) of the groove (9).

6. Adjusting device according to claim 4 or 5, **characterised in that** one of the outer edge parts (16) is formed integrally with the output sleeve (5), and the other of the outer edge parts (15) is guided in a movable, in particular slidable, fashion on the outer circumference of the output sleeve (5).

7. Adjusting device according to any of the preceding claims, **characterised in that**
- a toothed disc (19) adjoins an output sleeve (5) or the output sleeve (5), the diameter of said toothed disc (19) corresponding to the diameter of the output sleeve (5) and said toothed disc (19) having at least one further tooth (20) which corresponds to a tooth (8) or to the tooth (8) of the output sleeve (5), and the groove (9) of the rotary spindle (10) extending axially into the region of the tooth (20) of the toothed disc (19),
- the toothed disc (19) being rotatable relative to the output sleeve (5), and
- the toothed disc (19) and the output sleeve (5) being preloaded relative to one another by means of a spring (21, 28, 4).

8. Adjusting device according to claim 7, **characterised in that** the spring is a torsion spring (21).

9. Adjusting device according to claim 8, **characterised in that** the torsion spring (21) is located in a groove (22) in the toothed disc (19) and a second disc (7) - a driver disc.

10. Adjusting device according to claim 9, **characterised in that** the rotary position between the toothed disc (19) and the output sleeve (5) can be secured by means of a toothed coupling (23).

11. Adjusting device according to claim 10, **characterised in that** a further spring - preferably a Belleville spring (28) - preloads the toothed disc (19) by means of sloping ramps (29) on the teeth (30) of the toothed coupling (23).

12. Adjusting device according to claim 11, **characterised in that** the further spring is the compression spring (4).

13. Adjusting device according to any of claims 9 to 12, **characterised in that** the compression spring (4) is supported between the output sleeve (5) and the driver disc (7), the toothed disc (19) adjoining the driver disc (7) axially, and the toothed coupling (23) being embodied in turn with sloping ramps between the driver disc (7) and the toothed disc (19).

14. Adjusting device according to any of the preceding claims, **characterised in that** the tooth (8) of the output tooth assembly is provided with an elastically compressible material in the region of its outer edges.

15. Adjusting device according to claim 1 or 2, **characterised in that** an output part of the adjuster is embodied as a sleeve with an inner profile and the rotary spindle has an outer profile, the output part of the adjuster engaging around the rotary spindle, and outer teeth of the rotary spindle engaging with inner grooves of the output part of the adjusting device.

16. Adjusting device according to claim 1, **characterised in that** a spring (25) is located directly between one of the outer edges (11) of a tooth (8) of the output part (5) and the inner edge (14) of the groove (9), said spring (25) elastically preloading the tooth (8) and the groove (9) one against the other.

17. Adjusting device according to claim 1, **characterised in that** an annular disc (26) is fitted to an axial end of the rotary spindle (10) with one or more of the grooves (9), the inner circumferential profile of said annular disc (26) corresponding to the inner circumferential profile of the rest of the rotary spindle (10), the annular disc (26) and the rotary spindle (10) being preloaded relative to one another by means of a sprung element (27).

18. Disc brake **characterised by** an adjusting device according to any of the preceding claims.

## Revendications

1. Dispositif (1) de rattrapage de jeu d'un frein à disque,
a) qui est conçu pour la torsion et ainsi le déplacement axial d'au moins une broche (10) de rotation,
b) qui agit, au moyen d'une pièce d'application d'une pression, sur une garniture de frein,
c) et qui a un manchon de sortie ayant un agencement à dent de sortie ayant au moins une dent (8),
d) qui pénètre dans au moins une rainure (9) de la broche (10) de rotation,
e) dans lequel le manchon (5) de sortie ne peut pas se tordre par rapport à la broche (10) de rotation, mais est guidé à coulissement axialement dans celle-ci,
**caractérisé en ce que**
f) dans l'agencement à dent de sortie, la au moins une dent (8) et/ou la au moins une rainure (9) est/ou sont constituée(s) de manière à pouvoir être comprimées élastiquement,
g) dans l'agencement à dent de sortie, la au moins une dent (8) et/ou la au moins une rainure (9) sont appuyées élastiquement l'une contre l'autre, ou
h) dans l'agencement à dent de sortie, plusieurs des dents (8, 20) et/ou plusieurs des parties (9, 9') de rainure sont appuyées élastiquement l'une contre l'autre.

2. Dispositif de rattrapage de jeu suivant la revendication 1, **caractérisé en ce que** la rainure (9) est constituée sur le pourtour intérieur de la broche (10) de rotation.

3. Dispositif de rattrapage de jeu suivant la revendication 1 ou 2, **caractérisé en ce que** le manchon (5) de sortie pénètre dans une ouverture axiale de la broche (10) de rotation et a, sur son pourtour extérieur, la au moins une dent (8), qui pénètre dans la rainure (9), laquelle est constituée sur le pourtour intérieur de la broche (10) de rotation.

4. Dispositif de rattrapage de jeu suivant l'une des revendications précédentes, **caractérisé en ce qu'**un ressort (17) précontraint élastiquement deux ou plusieurs dents (8, 20) mobiles les unes par rapport aux autres de l'agencement à dent de sortie et/ou deux parties (15, 16) de flanc extérieur mobiles l'une par rapport à l'autre d'une dent ou de plusieurs dents (8).

5. Dispositif de rattrapage de jeu suivant l'une des revendications précédentes, **caractérisé en ce que** la au moins une dent (8) a les deux parties (15, 16) de flanc extérieur mobiles l'une par rapport à l'autre entre lesquelles est/sont disposés au moins un ou plusieurs ressorts (17) de compression, qui écartent les deux parties (15, 16) de flanc extérieur l'une de l'autre, de manière à ce que les deux flancs (11, 12) extérieurs s'appliquent sans jeu sur les flancs (13, 14) intérieurs de la rainure (9) .

6. Dispositif de rattrapage de jeu suivant la revendication 4 ou 5, **caractérisé en ce que** l'une des parties (16) de flanc extérieur est constituée d'une seule pièce avec le manchon (5) de sortie et l'autre des parties (15) de flanc extérieur est guidée en étant mobile, notamment en coulissant, sur le pourtour extérieur du manchon (5) de sortie.

7. Dispositif de rattrapage de jeu suivant l'une des revendications précédentes, **caractérisé en ce que**
- il se raccorde à un ou au manchon (5) de sortie, axialement, une rondelle (19) dentée, dont le diamètre correspond au diamètre du manchon (5) de sortie et qui a au moins une autre dent (20), qui correspond à une ou à la dent (8) du manchon (5) de sortie, la rainure (9) de la broche (10) de rotation s'étendant axialement jusque dans la région de la dent (20) de la rondelle (19) dentée,
- dans lequel la rondelle (19) dentée peut se tordre par rapport au manchon (5) de sortie, et
- la rondelle (19) dentée et le manchon (5) de sortie sont précontraints l'un par rapport à l'autre au moyen d'un ressort (21), 28, 4).

8. Dispositif de rattrapage de jeu suivant la revendication 7, **caractérisé en ce que** le ressort est un ressort (21) de torsion.

9. Dispositif de rattrapage de jeu suivant la revendication 8, **caractérisé en ce que** le ressort (21) de torsion est disposé dans une rainure (22) de la rondelle (19) dentée et d'une deuxième rondelle (7) - une rondelle d'entraîneur.

10. Dispositif de rattrapage de jeu suivant la revendication 9, **caractérisé en ce que** la position en rotation entre la rondelle (19) dentée et le manchon (5) de sortie peut être immobilisée au moyen d'un accouplement (23) par dent.

11. Dispositif de rattrapage de jeu suivant la revendication 10, **caractérisé en ce qu'**un autre ressort, de préférence un ressort (28) à disque, précontraint la rondelle (19) dentée par des rampes (29) inclinées sur les dents (30) de l'accouplement (23) par dent.

12. Dispositif de rattrapage de jeu suivant la revendication 11, **caractérisé en ce que** l'autre ressort est un ressort (4) de compression.

13. Dispositif de rattrapage de jeu suivant l'une des revendications 9 à 12, **caractérisé en ce que** le ressort (4) de compression est situé entre le manchon (5) de sortie et la rondelle (7) d'entraîneur, dans lequel, à la rondelle (7) d'entraîneur, se raccorde axialement la rondelle (19) dentée et l'accouplement (23) par dent est constitué à nouveau en ayant des rampes inclinées entre la rondelle (17) d'entraîneur et la rondelle (19) dentée.

14. Dispositif de rattrapage de jeu suivant l'une des revendications précédentes, **caractérisé en ce que** la dent (8) de l'agencement de sortie est pourvue, dans la région de son flanc extérieur, d'un matériau pouvant être comprimé élastiquement.

15. Dispositif de rattrapage de jeu suivant l'une des revendications 1 ou 2 précédentes, **caractérisé en ce qu'**une partie de sortie du rattrapeur est constituée sous la forme d'une douille à profil intérieur et la broche de rotation a un profil extérieur, la partie de sortie du rattrapeur entourant la broche de rotation et des dents extérieures de la broche de rotation pénétrant dans des rainures intérieures de la partie de sortie du dispositif de rattrapage de jeu.

16. Dispositif de rattrapage de jeu suivant la revendication 1, **caractérisé en ce que**, directement entre l'un des flancs (11) extérieurs d'une dent (8) de la partie (5) de sortie et le flanc (14) intérieur de la rainure (9), est disposé un ressort (25), qui précontraint élastiquement, l'une contre l'autre, la dent (8) et la rainure (9).

17. Dispositif de rattrapage de jeu suivant la revendication 1, **caractérisé en ce qu'**à une extrémité axiale de la broche (10) de rotation, ayant une ou plusieurs des rainures (9), est mise une rondelle (26) annulaire, dont le profil du pourtour intérieur correspond au profil du pourtour intérieur du reste de la broche (10) de rotation, la rondelle (26) et la broche (10) de rotation étant précontraintes, l'une par rapport à l'autre, au moyen d'un élément (27) élastique.

18. Frein à disque, **caractérisé par** un dispositif de rattrapage suivant l'une des revendications précédentes.
